**Europäisches Patentamt**

**European Patent Office**

**Office européen des brevets**

(11) Veröffentlichungsnummer: **0 210 452 B1**

# EUROPÄISCHE PATENTSCHRIFT

(45) Veröffentlichungstag der Patentschrift: **06.05.92**

(51) Int. Cl.5: **C07F 7/18**, C07F 7/02

(21) Anmeldenummer: **86108923.3**

(22) Anmeldetag: **01.07.86**

Die Akte enthält technische Angaben, die nach dem Eingang der Anmeldung eingereicht wurden und die nicht in dieser Patentschrift enthalten sind.

(54) **Verfahren zur Herstellung partiell veresterter Siliciumhalogenide.**

(30) Priorität: **31.07.85 DE 3527437**

(43) Veröffentlichungstag der Anmeldung:
**04.02.87 Patentblatt 87/06**

(45) Bekanntmachung des Hinweises auf die Patenterteilung:
**06.05.92 Patentblatt 92/19**

(84) Benannte Vertragsstaaten:
**BE CH DE FR GB IT LI NL**

(56) Entgegenhaltungen:
FR-A- 2 022 457          GB-A- 653 238
US-A- 3 399 222          US-A- 3 445 200
US-A- 4 016 188          US-A- 4 360 686

(73) Patentinhaber: **HÜLS AKTIENGESELLSCHAFT**
**Paul-Baumann-Strasse 1**
**W-4370 Marl 1(DE)**

(72) Erfinder: **Kötzsch, Hans-Joachim, Dr.**
**Fecampring 28**
**W-7888 Rheinfelden(DE)**
Erfinder: **Vahlensieck, Hans-Joachim, Dr.**
**Im Habiken 2**
**W-7867 Wehr(DE)**

## Beschreibung

Erfindungsgegenstand ist ein katalytisch arbeitendes Herstellverfahren für siliciumorganische Esterverbindungen der allgemeinen Formel I,

$$R_aSiX_n(OR')_{4-a-n} \qquad (I),$$

die 1 bis 3 Halogenid-Reste X neben Alkoxygruppen (OR') enthalten (n = 1 bis 3) und (4-a-n)≧1 und ggf. außerdem maximal 2 Substituenten R (a = 0 oder 1 oder 2), die Wasserstoff, Alkyl- (ggf. durch Halogen substituiert). Alkenyl- und/oder Arylgruppen (ggf. durch Halogen und/oder Alkyl substituiert) sein können. Die Estergruppen -OR' werden aus primären oder sekundären Alkoholresten gebildet, deren organische Gruppierung R' jeweils aus einer ggf. verzweigten gesättigten und/oder ungesättigten Alkylgruppe mit 1 bis 8 C-Atomen besteht. Die gemäß dem beanspruchten Verfahren erhaltenen Partialester der Formel I enthalten also mindestens einen R'O-Rest, so daß die Summe aus a + n die Werte 1,2 oder maximal 3 annehmen kann.

Bisher wurden diese Partialester ausschließlich durch Veresterung von Chlorsilanen mit unterstöchiometrischen Mengen an Alkoholen hergestellt. Bei dieser Arbeitsweise müssen erhebliche Überschüsse an Chlorsilanen angewandt werden, um die Bildungsrate der unerwünschten, aber zwangsläufig dabei entstehenden höheren Veresterungsstufen möglichst niedrig zu halten, wenn Monoester angestrebt werden. Trotzdem kommt man selbst bei drei- bis vierfachem Überschuß an Ausgangschlorsilan über ein Mono- : Diester-Verhältnis von 2 : 1 bis 3 : 1 nicht hinaus (vgl. z.B. K.A. Andrianov u.a., J. Gen. Chem. USSR 26. 207 bis 209, 1956; item Zhur. Obsh. Khim 20. 3754 bis 3757, 1959; item USSR-P. 130891). Noch komplizierter liegen die Verhältnisse bei der Herstellung von Di- oder Triestern wegen des zusätzlichen Auftretens weiterer unerwünschter Veresterungsstufen. Die Nachteile dieser herkömmlichen Verfahrensweise liegen hauptsächlich in den anspruchsvollen Reindestillationsmaßnahmen und vor allem in den zu niedrigen Ausbeuten an der gewünschten Veresterungsstufe. Es ist deshalb auch schon versucht worden, Ester der allgemeinen Formel

$$R_aSi(OR')_{4-a}$$

mit Chlorsilanen in Gegenwart von Chlorwasserstoff zu äquilibrieren (vgl. Brit. P. 653 238; M. Kumada, J. Inst. Polytechn. Osaka Univ., Ser. C, 2, 139 bis 146, 1952), wobei jedoch nur die gleichen nachteiligen Ergebnisse, wie vorstehend referiert, erzielt wurden.

Veresterungsversuche unter Verwendung von Pyridin als Säureakzeptor lieferten zwar die Zielprodukte in angereichertem Maße, jedoch mit noch unbefriedigenden Ausbeuten. Der besondere Nachteil dieser Verfahrensweise ist der hohe Kosten verursachende Zwangsanfall an unerwünschtem Pyridin-Hydrochlorid in großer Menge (vgl. US-PS 2 927 938).

Es bestand demnach die Aufgabe, zur besseren Nutzung der Ausgangsstoffe ein für die technische Anwendung geeignetes Herstellverfahren zu finden, nach dem die gesuchten Verbindungen der allgemeinen Formel I auf möglichst direktem Wege erhalten werden, der Anfall an Nebenprodukten möglichst gering ist und bei dem auch Halogensilanpartialestergemische als Ausgangsprodukte zur überwiegenden Herstellung und Abtrennung eines definierten Partialesters eingesetzt werden können.

Diese Aufgabe wurde gelöst durch die Auffindung eines Verfahrens, das durch die im kennzeichnenden Teil des Anspruchs genannten Maßnahmen charakterisiert ist.

Bei dieser Arbeitsweise entsteht ein Partialester der Formel I mit der Anzahl von Halogen- und Alkoxygruppen, die der Summe der Halogen- und Alkoxygruppen der Ausgangsprodukte entspricht. Die Ausgangsprodukte werden demzufolge in einem solchen Verhältnis zueinander eingesetzt, daß die Summe ihrer Halogen- und Alkoxygruppen den Halogen- und Alkoxygruppen des Zielprodukts entspricht. Ein Überschuß des einen oder anderen Ausgangsprodukts ist möglich; er setzt sich dann erfindungsgemäß nicht zu dem gewünschten Zielprodukt um und muß dann destillativ abgetrennt werden.

Es genügt auch bereits, in Gegenwart der erfindungsgemäßen Katalysatoren Estergruppen in situ durch Behandlung von Chlorsilanen mit einer entsprechenden Äquivalent-Anzahl R'OH einzuführen, wobei selbstverständlich Halogenwasserstoff nach den üblichen Verfahren der Halogensilan-Veresterung gasförmig zu entfernen ist. Durch die selektive äquilibrierende Wirkung der erfindungsgemäßen Katalysatoren entstehen hierbei ebenfalls die gewünschten Partialester der allgemeinen Formel I.

Nach dem erfindungsgemäßen Verfahren hergestellte Produkte der allgemeinen Formel I sind beispielsweise Trichlorethoxy- und Trichlor-(2-ethyl)hexoxysilan, Dichlordiethoxysilan, Dichlordiisopropoxysilan, Dichlordisekundär-butoxysilan, Dichlordi-(1-methoxy)isopropoxysilan, Chlortrimethoxy-, -triethoxy-, -triisopropoxy-, -trisekundär-butoxy-, -tri-(1-methoxy)isopropoxysilan, Methylethoxydichlorsilan, Methyldiethoxychlorsilan, Methyldi-n-propoxychlorsilan, Methyldiisobutoxychlorsilan, Propyldiisopropoxychlorsilan, Propyldisekundärbutoxychlorsilan, Isobutylmethoxydichlorsilan, Isobutylethoxydichlorsilan, Isobutyldiisopro-

poxychlorsilan, Isobutyldi-sekundär-butoxychlorsilan, Isobutyldi-(1-methoxy)isopropoxychlorsilan, Octylmethoxydichlorsilan, Hydrogenmethoxydichlorsilan, Hydrogendiethoxychlorsilan, Hydrogendiisobutoxychlorsilan, Chlormethyl-(2-ethyl) hexoxydichlorsilan, 3-Chlorpropyldiisopropoxychlorsilan, Vinylethoxydichlorsilan, Vinyldi-n-butoxychlorsilan, Allyldisekundär-butoxychlorsilan, Allyldi-(1-methoxy)-isopropoxychlorsilan, Phenyldiethoxychlorsilan, Phenyldiisopropoxychlorsilan, p-, m- und o-Bromphenyldimethoxychlorsilan, Dimethylethoxychlorsilan, Methylethylisobutoxychlorsilan, Methylpropyl-(1-methoxy)isopropoxychlorsilan, Methylisobutylisopropoxychlorsilan, Methylhydrogen-sekundär-butoxychlorsilan, Chlormethylmethyl-(1-methoxy)-isopropoxychlorsilan, 3-Chlorpropylmethylmethoxychlorsilan, Vinylmethylethoxychlorsilan, Phenylmethyl-(1-methoxy)isopropoxychlorsilan etc.

Die praktische Durchführung des erfindungsgemäßen Verfahrens erfolgt durch Vermischen der genannten Ausgangsverbindungen in dem im Endprodukt der Struktur I angestrebten X : OR'-Verhältnis mit dem Katalysator zu einer homogenen Lösung. Die Katalysator-Konzentration soll dabei mindestens $10^{-5}$ Gew.-%, bezogen auf die Menge des Gesamtansatzes, betragen. Die sofort beginnende Äquilibrierung ist eine Zeitreaktion, deren Geschwindigkeit durch die Wahl der Temperatur und des Katalysators beeinflußt werden kann. In der Regel wird bei Raumtemperaturen eine relativ langsame Äquilibrierungsreaktion beobachtet, z.B. eine Reaktionszeit von 20 bis 30 Stunden, so daß die Wahl einer erhöhten Reaktionstemperatur, z.B. die Erwärmung des Reaktionsgemisches bis auf wenige Grade unterhalb des Siedepunktes des Reaktionsgemisches, erfindungsgemäß den Vorteil kürzerer Äquilibrierungszeiten ermöglicht.

Die Aufarbeitung erfolgt nach beendeter Äquilibrierung destillativ. Überraschenderweise tritt während der destillativen Aufarbeitung mit den erfindungsgemäßen Katalysatoren, die dabei im Destillationsrückstand verbleiben, keine Rückreaktion im Sinne der Disproportionierung zu beispielsweise den eingesetzten Ausgangsprodukten auf. Der nachteilige Effekt solcher möglichen Rückreaktionen wurde dagegen bei Untersuchungen mit ebenfalls etwas äquilibrierend wirkenden katalytischen Mengen von Vanadin- und Zirkonestern, Estern der Phosphorsäure und der orthophosphorigen Säure sowie einigen Stickstoffverbindungen (Amin-Hydrochloriden und Amiden) gefunden.

Eine spezielle Durchführungsform des erfindungsgemäßen Verfahrens geht von Chlorsilanen der Formel

$$R_aSiX_{4-a} \quad (II)$$

aus, in der a, R und X die in Formel I genannte Bedeutung haben. Dabei wird in Gegenwart von mindestens $10^{-5}$ Gew.-% eines erfindungsgemäßen Katalysators das Äquilibrierungsgemisch in situ durch partielle Veresterung mit Alkoholen der allgemeinen Formel R'OH nach an sich bekannter Methode unter Abspaltung von gasförmigem Chlorwasserstoff erzeugt. Zu diesem Zweck wird das Chlorsilan, ggf. in Gegenwart eines inerten Lösungsmittels, mit dem Katalysator vermischt vorgelegt und der Alkohol R'OH in der dem im Endprodukt I gewünschten R'O : X-Verhältnis entsprechenden Menge in üblicher Weise unter thermischer Austreibung gasförmigen Chlorwasserstoffs zudosiert. Das erhaltene Reaktionsgemisch wird unter Rückfluß bis zur Erreichung eines konstanten Siedepunktes auf Siedetemperatur gehalten und anschließend durch Destillation aufgearbeitet.

Erfindungsgemäß eignen sich als Katalysatoren besonders Triphenylphosphin und Triphenylphosphinoxid, aber auch Phosphornitrildichlorid, Diethylphosphit sowie Aryl- und Alkylphosphonsäurealkylester, deren Esterkomponente bevorzugt 1 bis 4 C-Atome aufweisen und deren Alkylgruppen bevorzugt solche mit 1 bis 10 C-Atomen sind; beispielsweise Phenylphosphonsäurediethylester, Butylphosphonsäurediethylester und Octylphosphonsäurediethylester zeigen gute katalytische Wirksamkeit und stören die destillative Aufarbeitung nicht.

In der Regel geht das erfindungsgemäße Verfahren von Chlorsilanen der allgemeinen Formel II als der einen Komponente aus. Zu diesen Ausgangsprodukten gehören beispielsweise Tetrachlorsilan, Trichlorsilan, Methyltrichlorsilan, Ethyltrichlorsilan, Propyltrichlorsilan, Isobutyltrichlorsilan, 4-Methylpentyltrichlorsilan, 2,5-Dimethylhexyltrichlorsilan, Cyclohexyltrichlorsilan, Vinyltrichlorsilan, Allyltrichlorsilan, 3-Chlorpropyltrichlorsilan, 2-Phenylethyltrichlorsilan, Phenyltrichlorsilan, p-Bromphenyltrichlorsilan, Dichlordihydrogensilan, Methyldichlorhydrogensilan, Dimethyldichlorsilan, Methylisobutyldichlorsilan, Vinylmethyldichlorsilan, Chlormethylmethyldichlorsilan, Phenylmethyldichlorsilan, Diphenyldichlorsilan usw.

Als zweite Reaktionskomponente zusammen mit einem Chlorsilan der allgemeinen Formel II, wie vorstehend beschrieben, werden außer den höher veresterten Halogenpartialestern Silanester der allgemeinen Formel

$$R_aSi(OR')_{4-a}$$

eingesetzt, in der R, R' und a die in Formel I genannte Bedeutung haben. Geeignete Silanester dieser Formel sind beispielsweise die halogenidfreien Methyl-, Ethyl-, n- und iso-Propyl-, n-, iso- und sekundär-Butyl-, 1-Methoxyisopropyl-, 2-Ethylhexyl-Ester-Derivate der vorstehenden Chlorsilane.

Als Ausgangsprodukte können weiterhin die Partialester der allgemeinen Formel I, wie oben als Produkte aufgeführt, eingesetzt werden. Insbesondere eignen sich Partialesterchlorid-Gemische, wie sie gewöhnlich gemäß bisherigem Kenntnisstand bei der bekannten Methode der partiellen Veresterung der vorstehenden Chlorsilane der allgemeinen Formel I mit Alkoholen entstehen. Dabei muß jedoch der Veresterungsgrad mindestens eines der Ausgangsprodukte höher sein als der Veresterungsgrad der gewünschten Endprodukte.

Die Reste R in den eingesetzten beiden Ausgangsprodukten sollten nach Möglichkeit gleich sein, besonders wenn einheitliche Partialester gewünscht werden. Es ist jedoch auch möglich, Ausgangsprodukte mit unterschiedlichen Alkylgruppen einzusetzen. Auch in diesen Fällen läuft die Äquilibrierung im Sinne der vorliegenden Erfindung ab. Man erhält dann ein Gemisch der Halogensilanester mit gleichem Veresterungsgrad, das dann ggf. destillativ in seine Komponenten aufgetrennt werden kann.

Für die besondere Ausgestaltungsform der partiellen Veresterung vorstehender Chlorsilane der allgemeinen Formel I in Gegenwart der erfindungsgemäßen Katalysatoren gemäß Ansprüchen 2 und 3 werden als alkoholische Komponenten beispielsweise Methanol, Ethanol, n- und Isopropanol, n-, iso- und sec-Butanol, 1-Methoxypropanol-2, 2-Ethylhexanol etc. verwendet. Als dabei ggf. zu verwendende inerte Medien eignen sich aliphatische, aromatische und/oder chlorierte Kohlenwasserstoffe. Im einzelnen sind dies beispielsweise die Pentane, Hexane, Heptane, das Isooctan, Cyclohexan, Methylcyclohexan, Benzinfraktionen wie Petrolether oder Ligroin, Benzol, Toluol, die Xylenole, Methylenchlorid, Chloroform, Tetrachlorkohlenstoff, trans-Dichlorethylen, Trichlorethylen, Perchlorethylen, Chlorbenzol, die Dichlorbenzole, die Trichlorethane, Trichlortrifluorethan, 1,1,1,3-Tetrachlorpropan etc.

Die Verbindungen der allgemeinen Formel I finden technische Verwendung als Ausgangsprodukte z.B. für die Herstellung neutraler Silicon-Vernetzer in kaltvernetzenden dauerelastischen Dichtungsmassen sowie für die Herstellung von Phasen- und Grenzflächenvermittlern in der hydraulischen Druckübertragung und in Isocyanatgruppen- und/oder Urethan-haltigen Compounds.

Folgende Beispiele erläutern das Verfahren, ohne jedoch dessen Umfang zu begrenzen:

Beispiel 1

In einer 4 l-Kolonnenblase wurden 2,4 kg (16 Mol) Methyltrichlorsilan und 1,42 kg (8 Mol) Methyltriethoxysilan mit je 1 g Triphenylphosphin homogen gemischt und 14 Stunden bei 80 °C gerührt. Danach wurde durch Kolonnendestillation eine Ausbeute an 3,52 kg (ca. 92 %) Methylethoxydichlorsilan (Kp. 100,5 °C) erhalten. Im hold-up der Destillationsblase war noch weiteres Produkt enthalten.

Beispiel 2

Analog Beispiel 1 wurden aus 1,8 kg (12 Mol) Methyltrichlorsilan und 2,16 kg (12 Mol) Methyldiethoxychlorsilan mit 1 g Isobutylphosphonsäurediethylester als Katalysator 3,56 kg (ca. 93 % Ausbeute) Methylethoxydichlorsilan hergestellt.

Beispiel 3

Die Reaktionsapparatur bestand aus einem beheizbaren 4 l-Mehrhalskolben mit Rührer, Innenthermometer, Rückflußkühler mit nachgeschaltetem Tiefkühler zur Abführung von Chlorwasserstoff und einem Tropftrichter, dessen Auslaufrohr in die Reaktionsflüssigkeit eintauchte. Im Kolben wurden 3 kg (28 Mol) Methyltrichlorsilan vorgelegt, das 500 mg Triphenylphosphinoxyd gelöst enthielt. Innerhalb 130 Minuten wurden unter Rühren bei Umgebungstemperatur 920 g (20 Mol) wasserfreies Ethanol mit gleichbleibender Geschwindigkeit zudosiert, wobei die Innentemperatur auf + 4 °C sank und eine kräftige Chlorwasserstoffentwicklung eintrat. Anschließend wurde das Reaktionsgemisch innerhalb 4 Stunden unter ständigem Sieden auf ca. 100 °C erwärmt, wobei restlicher Chlorwasserstoff ausgetrieben wurde, und weitere 6 Stunden unter Rückfluß gekocht. Die Destillation lieferte 2,96 kg (ca. 93 %) Methylethoxydichlorsilan.

Beispiel 4

Analog Beispiel 1 wurden aus 650 g (4 Mol) Vinyltrichlorsilan und 2 580 g (8 Mol) Vinyltri-(1-methoxyisopropoxy)silan mit 2 g Octylphosphonsäurediethylester als Katalysator 2 880 g (ca. 89 % Ausbeute) Vinyldi-(1-methoxyisopropoxy)chlorsilan, Kp. 82 °C(1 mbar), hergestellt.

Beispiel 5

Analog Beispiel 1 wurden aus 340 g (2 Mol) Tetrachlorsilan und 1 923 g (6 Mol) Tetra-sec-butoxysilan innerhalb 20 Stunden bei 160 °C 2 130 g (ca. 94 % Ausbeute) Tri-sec-butoxychlorsilan, Kp. 86 °C (18 mbar), hergestellt.

Beispiel 6

Analog Beispiel 3 wurden aus 1 916 g (10 Mol) Isobutyltrichlorsilan und 1,2 kg (20 Mol) Isopropanol in Gegenwart von 700 ml Heptan und 12 Stunden abschließendem Rückflußkochen 2 190 g (ca. 92 % Ausbeute) Isobutyldiisopropoxychlorsilan, Kp. 67 °C (2 mbar), hergestellt.

Beispiel 7

Analog Beispiel 1 wurden in einem 6 l-Kolben aus 1 910 g (10 Mol) Phenylmethyldichlorsilan und 1 830 g (10 Mol) Chlormethylmethyldiethoxysilan und Aufarbeitung durch Kolonnendestillation im Vakuum 1 722 g (ca. 86 % Ausbeute) Phenylmethylethoxychlorsilan, Kp. 81 °C (1 mbar), und 1 612 g (ca. 93 % Ausbeute) Chlormethylmethylethoxychlorsilan, Kp. 36 °C (5 mbar), hergestellt.

**Patentansprüche**

1. Verfahren zur Herstellung von Partialesterhalogeniden des Siliciums der allgemeinen Formel I

   $R_a SiX_n (OR')_{4-a-n}$ (I),

   in der

   | | |
   |---|---|
   | R | Wasserstoff, einen gegebenenfalls durch Halogen substituierten Alkylrest, gegebenenfalls durch Halogen und/oder Alkyl substituierte Alkenyl- und/oder Arylgruppen, |
   | X | einen Halogenidrest, |
   | R' | gegebenenfalls verzweigte Alkyl- und/oder Alkenylgruppen mit 1 bis 8 Kohlenstoffatomen bedeutet, |
   | a | = 0, 1 oder 2 und |
   | n | = 1 bis 3 ist, wobei |
   | 4-a-n | größer oder gleich 1 ist, |

   durch Äquilibrierung von Chlorsilanen und Silanestern in Gegenwart eines Katalysators, dadurch gekennzeichnet, daß als Ausgangsprodukte für die Äquilibrierung eingesetzt werden einerseits Chlorsilane und/oder Partialesterhalogenide mit einem niedrigeren Veresterungsgrad als das gewünschte Produkt und andererseits Silanester und/oder solche Partialesterhalogenide, deren Veresterungsgrad höher als derjenige des gewünschten Produktes ist, und daß als Äquilibrierungskatalysator eine phosphororganische Verbindung aus der Gruppe

   Phosphornitrildichlorid, Triphenylphosphin, Triphenylphosphinoxid, Aryl- und Alkylphosphonsäurealkylester und Dialkylphosphite

   dient.

2. Verfahren gemäß Anspruch 1, dadurch gekennzeichnet, daß die Herstellung mindestens eines der Ausgangsprodukte und die Äquilibrierung gleichzeitig erfolgen.

3. Verfahren gemäß Anspruch 2, dadurch gekennzeichnet, daß man Chlorsilane in Gegenwart von phosphororganischen Verbindungen mit einer solchen Menge an Alkoholen verestert, die dem gewünschten Halogenpartialester entsprechen.

**Claims**

1. Process for the preparation of partial ester halides of silicon of the general formula I

   $R_a SiX_n (OR')_{4-a-n}$ (I)

   in which

   | | |
   |---|---|
   | R | denotes hydrogen, an alkyl residue substituted possibly by halogen, alkenyl and/or aryl groups optionally substituted by halogen and/or alkyl, |
   | X | denotes a halogen residue, |
   | R' | denotes alkyl and/or alkenyl groups with 1 to 8 carbon atoms which are optionally branched, |
   | a | = 0, 1 or 2 and |
   | n | = 1 to 3, with |

   4-a-n being larger or equal to one, by equilibration of chlorosilanes and silane esters in the presence of a catalyst, characterised in that there are employed as starting products for the equilibration on the one hand chlorosilanes and/or partial ester halides with a lower degree of esterification than the desired product and on the other hand silane esters and/or those partial ester halides whose degree of esterification is higher than that of the desired product, and that, serving as equilibration catalyst is an organo-phosphorus compound from the group
   phosphorus nitrilodichloride,
   triphenylphosphine,
   triphenylphosphine oxide,
   aryl and alkylphosphonic acid alkyl esters and
   dialkylphosphites.

2. Process according to Claim 1, characterised in that the preparation at least of one of the starting products and the equilibration take place simultaneously.

**3.** Process according to Claim 2, characterised in that chlorosilanes are esterified in the presence of organo-phosphorus compounds with that amount of alcohols which corresponds to the desired halogen partial ester.

**Revendications**

**1.** Procédé de préparation des halogénures d'esters partiels du silicium, de formule générale I :

$$R_aSiX_n(OR')_{4-a-n} \qquad (I),$$

dans laquelle :

R représente un atome d'hydrogène, un reste alkyle éventuellement substitué par de l'halogène, des groupes alcényles et/ou aryles éventuellement substitués par de l'halogène et/ou par des groupes alkyles,

X représente un reste halogénure,

R' représente des groupes alkyles et/ou alcényles éventuellement ramifiés, comportant 1 à 8 atomes de carbone,

a vaut 0, 1 ou 2, et

n vaut 1 à 3,

le terme (4-a-n) étant supérieur ou égal à 1, par mise en équilibre de chlorosilanes et d'esters de silanes en présence d'un catalyseur, procédé caractérisé en ce qu'on utilise comme produits de départ pour la mise en équilibre des chlorosilanes et/ou des halogénures d'esters partiels présentant un degré d'estérification inférieur à celui du produit voulu et, d'autre part, des esters de silanes et/ou des halogénures d'esters partiels de silanes dont le degré d'estérification est supérieur à celui du produit voulu, et en ce qu'on utilise, comme catalyseurs pour la mise en équilibre, un composé organique du phosphore choisi dans l'ensemble constitué par :

le dichlorure de nitrile d'acide phosphorique, la triphénylphosphine, l'oxyde de triphénylphosphine, des esters alkyliques d'acides arylphosphoniques et alkylphosphoniques, et des phosphites de dialkyles.

**2.** Procédé selon la revendication 1, caractérisé en ce que la préparation d'au moins l'un des produits de départ et la mise en équilibre ont lieu simultanément.

**3.** Procédé selon la revendication 2, caractérisé en ce qu'on estérifie des chlorosilanes, en présence de composés organiques du phosphore, avec une quantité d'alcools correspondant à l'ester partiel halogéné voulu.